# FASCICULE DE BREVET EUROPEEN

(11) **EP 2 880 202 B1**
(45) Date de publication et mention de la délivrance du brevet: **05.10.2016**
(21) Numéro de dépôt: 13745069.8
(22) Date de dépôt: 02.08.2013
(51) Int. Cl.: C25B 1/04, C25B 11/04

(54) **ELECTRODES COMPOSITES POUR L'ELECTROLYSE DE L'EAU**
KOMPOSITELEKTRODEN FÜR WASSERELEKTROLYSE
COMPOSITE ELECTRODES FOR THE ELECTROLYSIS OF WATER

(30) Priorité: 03.08.2012 FR 1257612
(43) Date de publication de la demande: 10.06.2015
(73) Titulaire: Centre National de la Recherche Scientifique, 75016 Paris (FR); Université de Montpellier, 34090 Montpellier (FR); Bulane, 34660 Cournonsec (FR)
(72) Inventeur: PATRU, Alexandra, CH-5210 Windisch (CH); FAVIER, Frédéric, F-34980 Saint Clément de Rivière (FR); JEREZ, Nicolas, F-34690 Fabregues (FR)
(74) Mandataire: Pontet Allano & Associes
(86) Numéro de dépôt international: PCT/EP2013/066276
(87) Numéro de publication internationale: WO 2014/020151

(56) Documents cités:
- EP-A1- 0 622 861
- US-A- 5 271 813
- DATABASE WPI Week 201023 Thomson Scientific, London, GB; AN 2010-D22252 XP002689991, -& JP 2010 065283 A (DAINIPPON PRINTING CO LTD) 25 mars 2010 (2010-03-25)

## Description

La présente invention a pour objet une électrode apte à être utilisée pour l'électrolyse de l'eau en milieu électrolyte liquide, un procédé de formulation d'une telle électrode, un dispositif d'électrolyse de l'eau comprenant ladite électrode, et un procédé de production d'un mélange hydrogène/oxygène ou d'hydrogène seul ou d'oxygène seul.

Les principaux usages de l'oxygène pur sont la sidérurgie et la pétrochimie. D'autres procédés nécessitent également de gros tonnages d'oxygène, notamment le blanchiment de la pâte à papier, le retraitement de certains déchets chimiques et la production de flammes à haute température. L'oxygène est également utilisé comme gaz médical en oxygénothérapie normo- ou hyperbare.

Actuellement, l'oxygène est obtenu de manière industrielle principalement par séparation cryogénique des composés de l'air, c'est-à-dire par une liquéfaction de l'air suivie d'une distillation fractionnée. L'oxygène pur peut également être obtenu par électrolyse de l'eau.

L'hydrogène est une des matières de base de l'industrie chimique et pétrochimique. Il est utilisé notamment pour la production d'ammoniac et de méthanol et pour le raffinage du pétrole ; il est également employé dans les secteurs de la métallurgie, de l'électronique, de la pharmacologie ainsi que dans le traitement de produits alimentaires.

L'hydrogène est également un vecteur énergétique d'avenir en remplacement des hydrocarbures fossiles, notamment dans le domaine des transports. Il peut être utilisé directement dans des moteurs à combustion interne, ou alimenter des piles à combustibles produisant de l'électricité. C'est également un moyen de stockage d'énergie qui peut être utilisé en cas de besoin dans des installations de production d'électricité de type éoliennes, panneaux photovoltaïques et centrales nucléaires lorsque les apports en électricité ne sont pas constants.

L'hydrogène n'est pas directement disponible dans la nature mais il peut être produit à partir des trois grandes sources que sont les énergies fossiles, nucléaires et renouvelables.

Aujourd'hui, 90 % du gaz hydrogène est produit de manière industrielle soit par vaporéformage de méthane (craquage du gaz naturel par la vapeur d'eau à haute température), soit par oxydation partielle (production d'hydrogène à partir d'hydrocarbures lourds et d'oxygène). Ces deux procédés présentent l'inconvénient d'émettre d'importantes quantités de CO₂.

Un troisième procédé, l'électrolyse de l'eau, constitue la solution la plus "durable" de production d'hydrogène. C'est un moyen de production d'hydrogène propre car les émissions de gaz à effet de serre (GES) et de CO₂ par kilogramme d'hydrogène produit sont essentiellement liées à la source d'énergie électrique utilisée pour l'électrolyse. Ce moyen de production d'hydrogène peut être alimenté en énergie électrique d'origine renouvelable et permet de stocker de l'électricité sous forme chimique.

L'électrolyse de l'eau consiste à dissocier les atomes d'oxygène et d'hydrogène combinés dans les molécules d'eau, selon la réaction

H₂O → H₂ + 1/2 O₂

Une cellule d'électrolyse est constituée de deux électrodes (anode et cathode, conducteurs électroniques) reliées à un générateur de courant continu, et séparées par un électrolyte (milieu conducteur ionique).

Cet électrolyte peut être :
- soit solide et peut alors être :
   * soit une membrane polymère échangeuse de protons : dans cette technologie appelée PEM (Proton Exchange Membrane), une membrane échangeuse de protons ou membrane à électrolyte polymère est utilisée. Il s'agit d'une membrane semi-perméable permettant la conduction protonique tout en étant imperméable aux gaz tels que l'oxygène ou l'hydrogène. Les avantages de la technologie PEM sont la compacité, la simplicité du fonctionnement et la limitation des problèmes de corrosion. Cependant le coût de la membrane polymère et l'utilisation de catalyseurs à base de métaux nobles conduisent à des équipements relativement onéreux.
   * soit une membrane céramique conductrice d'ions O₂⁻: une des particularités de cette technologie (piles à combustible à oxyde solide - SOFC - Solid Oxide Fuel Cell) est l'utilisation d'un électrolyte solide, qui joue le rôle de conducteur pour l'anion oxygène. Il s'agit habituellement de zirconium dopé d'ytterbium. Les électrodes peuvent être en acier ou en céramique selon les températures de fonctionnement et l'électrolyte désiré.
      - soit liquide et est alors une solution aqueuse acide ou basique.

Dans le cas de l'électrolyse de l'eau en milieu acide, l'électrolyte est une solution d'un acide fort, par exemple une solution d'acide sulfurique (H₂SO₄) ou d'acide chlorhydrique (HCl). Toutefois la gestion d'électrolytes acides concentrés pose des problèmes de corrosion et les solutions techniques sont très onéreuses.

L'électrolyse alcaline est ainsi la technologie la plus répandue pour la production d'hydrogène électrolytique. Dans un électrolyseur à technologie alcaline, l'électrolyte est une solution aqueuse d'hydroxyde de potassium (KOH). La conduction ionique est alors assurée par les ions hydroxyde (OH⁻) et potassium (K⁺).

Les systèmes d'électrolyse alcaline actuels fonctionnent à une tension électrique comprise entre 1,7 et 2,1 V. La solution de KOH a une concentration comprise entre 25% et 35%. Ce procédé est actuellement mis en oeuvre en lien avec des sources d'électricité peu chères (par exemple, hydraulique). Des études sont également réalisées dans des cas particuliers, comme l'exploitation de centrales électriques durant les heures creuses ou bien de centrales nucléaires dédiées à fournir de l'électricité aux usines de production d'hydrogène. Des sources encore en développement, telles que les piles photovoltaïques sont aussi proposées pour fournir massivement de l'électricité pour ce procédé.

A ce jour, le nickel déposé sur acier ou le nickel massif sont les matériaux d'électrodes les plus couramment utilisés dans les systèmes industriels d'électrolyse alcaline.

La technique de dépôt la plus employée aujourd'hui pour la fabrication d'électrodes pour l'électrolyse alcaline de l'eau est l'électrodépôt. Cette approche est intéressante d'un point de vue économique puisqu'elle limite la quantité de matériau d'électrode mis en oeuvre. En outre, elle permet la fabrication de couches mécaniquement stables. Les inconvénients de cette technique sont la limitation de la surface développée par l'électrode en contact avec l'électrolyte entraînant une faiblesse des performances associées et la complexité des compositions chimiques.

Différents procédés de fabrication d'électrodes ont déjà été proposés pour des cellules de décomposition de l'eau par électrolyse, que ce soit en milieu acide ou en milieu basique. On peut citer notamment :
- la décomposition thermique d'un sel d'un ou plusieurs métaux précurseurs sur un support métallique comme décrit dans les demandes de brevets et brevets FR 2581082, FR 2460343, FR 2547598, FR 2418280 et FR 2418281,
- l'électrodépôt d'un ou plusieurs sels métalliques sur un support conducteur électronique tel que décrit dans les demandes de brevets et brevets FR 2385817, FR 2402477 et
- le dépôt plasma décrit dans la demande internationale WO 2008067899 et le brevet FR 2518583.

Un autre exemple de fabrication d'électrodes pour l'électrolyse de l'eau est décrit dans le brevet FR 2446870. Les électrodes composites sont composées de polytétrafluoroéthylène (PTFE), de carbone et d'oxydes de métaux nobles (Ru, Ir) par un procédé multi-étapes (broyage, traitement thermiques, pressage). Les deux inconvénients majeurs de ce procédé sont sa complexité et le choix des matériaux utilisés qui ne sont pas complètement adaptés à ce type d'application. En effet, le polymère liant utilisé (PTFE) est isolant et hydrophobe, ce qui tend à diminuer les performances des électrodes. En outre, le carbone, bien qu'il possède une bonne conductivité électrique, présente une résistance réduite à la corrosion dans des conditions alcalines.

La demande JP 2012 065283 concerne un procédé d'électrolyse pour la production de gaz hydrogène qui met en jeu la réduction de l'eau et l'oxydation de l'ammoniaque gaz et un dispositif pour mettre en oeuvre ledit procédé. L'encre est déposée sur une surface de transfert (membrane en PTFE) puis un transfert de la couche catalytique du PTFE vers la surface d'une mousse métallique est réalisée, suivie de l'assemblage des électrodes sur chaque face d'une membrane anionique et de l'imprégnation de la membrane anionique par KOH (ou NaOH). Cette membrane joue le rôle d'électrolyte solide permettant le transport des OH-. Éventuellement, une fine couche de carbone peut être ajoutée entre la couche catalytique et la mousse métallique. Ainsi le dispositif qui est décrit est un dispositif d'électrolyse H₂O/ammoniaque basé sur le design des piles à combustible alcalines dont il reprend tous les éléments et les techniques d'assemblage, l'ammoniaque remplaçant l'eau dans le compartiment anolyte où de l'azote N2 est produit à la place de 02 . Ce dispositif est une pile alcaline inversée dans laquelle les électrodes conductrices d'hydroxyde sont imperméables aux gaz (azote et ammoniac).

La demande EP 0 622 861 concerne la fabrication d'un assemblage membrane-électrode (MEA ou membrane electrode assembly) pour l'application pile à combustible ou l'électrolyse de synthèse d'hydroxydes de métaux alcalins à partir des chlorures correspondants. Ces techniques mettent en oeuvre des encres à base principalement de Nafion® qui sont déposées à la surface de membranes échangeuses d'ions (ici de proton).

Des efforts restent donc à faire pour augmenter les performances et la durabilité des systèmes existants. Pour atteindre cet objectif, de nouveaux matériaux d'électrodes doivent être élaborés qui permettront à la fois de catalyser les réactions électrochimiques afin d'obtenir une forte densité de courant pour une faible surtension, et de résister à la corrosion et aux contraintes mécaniques.

Récemment, de nombreuses recherches ont porté sur le développement de nouveaux matériaux électrocatalytiques, notamment par une structuration à l'échelle nanométrique des matériaux classiques massifs. Les matériaux nanostructurés sont intéressants dans le domaine de la catalyse et de l'électrocatalyse grâce à leur grande surface développée et à l'émergence de nouvelles propriétés physiques à cette échelle. Dans les différents types de réactions électrochimiques intervenant dans l'électrolyse de l'eau en milieu alcalin, leur application est néanmoins difficile. Cette difficulté est, entre-autre, liée à la production de gaz intervenant aux deux électrodes qui génère des contraintes défavorables à la stabilité et à l'intégrité mécanique des électrodes et qui entraîne par conséquent une perte d'activité des électrodes avec le temps par perte de matériel catalytique.

Un but de l'invention est de pallier les inconvénients de l'état de la technique, et en particulier de proposer un dispositif d'électrolyse de l'eau, en milieu électrolyte liquide alcalin ou en milieu électrolyte liquide acide, comprenant des électrodes présentant :
- une bonne stabilité chimique et mécanique
- une bonne conductivité électrique
- une bonne conductivité aux ions
- une bonne balance hydrophile/hydrophobe
- des propriétés limitées d'adsorption des gaz formés H2 et 02
- une bonne perméabilité à l'eau et au gaz
- une longue durée de vie utile
- une grande surface active et
- une capacité à catalyser les réactions de décomposition de l'eau.

Un objet de l'invention est une électrode composite associant un matériau catalytique et un liant, apte à être utilisée pour l'électrolyse de l'eau en milieu électrolyte liquide, et formulée par un procédé de formulation comprenant les étapes suivantes :
a. la dissolution dans un solvant volatile ou un mélange de solvants volatiles, d'au moins un liant polymère conducteur ionique et permettant, à l'état solide, la diffusion des gaz formés lors de l'électrolyse,
b. l'addition à la solution obtenue à l'étape a) d'au moins un matériau électrocatalytique sous forme de poudre divisée, pour obtenir un mélange, et
c. le dépôt sur un support ou collecteur conducteur métallique ou de type métallique, ledit support ou ledit collecteur étant plein ou ajouré et stable chimiquement en milieu aqueux, du mélange obtenu à l'étape b), les étapes a) et b) pouvant être mises en oeuvre simultanément, successivement ou être inversées.

Ainsi l'électrode selon l'invention est perméable aux gaz, apte à être utilisée dans un procédé d'électrolyse mettant en oeuvre un électrolyte liquide et présente les propriétés listées précédemment, notamment une bonne stabilité chimique et mécanique et une durée de vie longue.

Le liant polymère est choisi pour ses capacités à être déposé sous forme d'une couche d'épaisseur variable et pour ses capacités de conduction ionique en milieu aqueux et de diffusion des gaz dissous. La couche d'épaisseur variable, avantageusement comprise entre 1 et 500 µm, en particulier de l'ordre de 10 à 100 µm, peut être notamment un gel ou un film.

Dans un mode de réalisation avantageux de l'invention, l'électrode est hydrophile et présente de faibles capacités d'adsorption des gaz générés H2 et 02. On maximise ainsi le temps de contact de l'électrocatalyseur avec l'électrolyte, ce qui permet d'augmenter l'efficacité du transfert de matière à la surface active et donc celle du processus de production gazeuse.

Conformément à l'invention, tout matériau électrocatalytique connu dans l'état de l'art peut être utilisé, sous forme de poudre divisée.

Par poudre divisée, on entend une poudre constituée de particules de taille micronique, sub-micronique ou nanométrique. Conformément à l'invention, les poudres divisées sont soit disponibles dans le commerce, soit préparées par des techniques connues de l'homme du métier. Elles peuvent être utilisées sans limite dans leur composition, leur taille, ou leur cristallinité. L'importante charge en particules des électrodes de l'invention permet une bonne percolation des charges électroniques échangées dans les processus redox dans toute l'épaisseur du film.

Au sens de la présente invention, on entend par support ou collecteur conducteur de type métallique tout matériau conducteur ayant les mêmes propriétés de conduction que les métaux, par exemple le graphite ou certains polymères conducteurs tels que la polyaniline et le polythiophène. Ce support peut avoir n'importe quelle forme permettant le dépôt du mélange par une méthode choisie dans le groupe comprenant notamment le trempage, l'impression, l'induction, le pressage, l'enduction, le dépôt à la tournette (ou « spin-coating »), la filtration, le dépôt sous vide, le dépôt par pulvérisation, le coulage, l'extrusion et le laminage. Comme exemples de techniques d'impression, on peut citer la sérigraphie et l'impression par jet d'encre.

Au sens de la présente invention, le terme support et le terme collecteur sont employés indifféremment.

A titre d'exemple de support, on peut citer une grille (support ajouré), une plaque ou une feuille d'acier inoxydable (304L ou 316L par exemple) (supports pleins). Ainsi contrairement aux électrodes connues réalisées en mettant en oeuvre ce type de formulation et pour lesquelles il est indispensable que le support conducteur soit poreux (mousse, grille, tissu carboné...), l'électrode selon la présente invention peut être supportée sur un support plein.

L'avantage du mélange selon l'invention est qu'il peut être déposé sur le collecteur plein ou ajouré, par des techniques usuelles de dépôt facilement accessibles et permettant un dépôt sous formes de couches d'épaisseurs variables idéalement de l'ordre de 10 à 100 µm.

Conformément à l'invention, le mélange peut être préparé par toute technique connue de l'homme du métier, notamment par mélange du liant et du au moins un matériau électrocatalytique sous forme de poudre divisée dans un solvant approprié ou mélange de solvants appropriés pour l'obtention d'un mélange aux propriétés rhéologiques permettant le dépôt des matériaux d'électrode composite sous forme d'un film d'épaisseur contrôlée sur un substrat conducteur électronique. L'utilisation du matériau électrocatalytique sous forme de poudre divisée permet une maximisation de la surface développée par les électrodes et une exaltation des performances associées. L'homme du métier saura faire les choix des différents paramètres de formulation à la lumière de ses connaissances générales et des caractéristiques physico-chimiques des dits mélanges.

Les performances de l'électrode selon l'invention sont améliorées par rapport aux dispositifs classiques puisque, contrairement aux électrodes de l'art antérieur, tout matériau électrocatalytique sous forme de poudre de grande surface spécifique est susceptible d'être déposé sous la forme d'une couche d'épaisseur variable qui sera à déterminer par l'homme du métier en fonction des résultats qu'il souhaite obtenir.

Avantageusement, le liant polymère conducteur ionique est :
* soit conducteur de groupes anioniques, notamment de groupe hydroxy et est choisi dans le groupe comprenant notamment :
   - des polymères stables en milieu aqueux, pouvant être perfluorés, partiellement fluorés ou non fluorés et présentant des groupes cationiques permettant la conduction des anions hydroxydes, lesdits groupes cationiques étant de type ammonium quaternaire, guanidinium, imidazolium, phosphonium, pyridium ou sulfide,
   - le polybenzimidazole non greffé,
   - le chitosane, ainsi que
   - les mélanges de polymères comprenant au moins un des différents polymères cités précédemment, ledit mélange possédant des propriétés de conducteur anionique,
* soit conducteur de groupes cationiques permettant la conduction des protons et est choisi dans le groupe comprenant notamment :
   - des polymères stables en milieu aqueux, pouvant être perfluorés, partiellement fluorés ou non fluorés et présentant des groupes anioniques permettant la conduction des protons,
   - le polybenzimidazole greffé,
   - le chitosane, ainsi que
   - les mélanges de polymères comprenant au moins un des différents polymères cités précédemment, ledit mélange possédant des propriétés de conducteur cationique.

Parmi les polymères stables en milieu aqueux et présentant des groupes cationiques permettant la conduction d'anions, on peut notamment citer des chaînes polymériques de type perfluoré comme par exemple le polytétrafluoroéthylène (PTFE), de type partiellement fluoré, comme par exemple le polyfluorure de vinylidène (PVDF) ou de type non fluoré comme le polyéthylène, qui seront greffées avec des groupements moléculaires conducteurs anioniques.

Parmi les polymères stables en milieu aqueux et présentant des groupes anioniques permettant la conduction des protons, on peut considérer toute chaîne polymérique stable en milieu aqueux contenant des groupements tels que -SO₃⁻, -COO⁻, -PO₃²⁻, -PO₃H⁻, -C₆H₄O⁻, On peut notamment citer le Nafion^{®}, le polybenzimidazole (PBI) sulfoné ou phosphoné, le polyétheréthercétone (PEEK) sulfoné ou phosphoné.

Conformément à la présente invention, on pourra utiliser tout mélange comprenant au moins deux polymères dont un au moins est choisi dans les groupes de polymères cités précédemment, pourvu que le mélange final soit conducteur ionique en milieu aqueux ; ainsi on peut citer à titre d'exemple un mélange comprenant un polymère stable en milieu alcalin et présentant des groupes cationiques permettant la conduction des anions hydroxydes avec un polyéthylène non greffé par des groupements moléculaires conducteurs anioniques pourvu que ce mélange final soit conducteur anionique en milieu alcalin ; on peut également citer à titre d'exemple un mélange d'un polymère stable en milieu acide ou alcalin et présentant des groupes anioniques ou cationiques permettant la conduction des protons ou des hydroxydes et de polybenzimidazole greffé ou non.

Le polybenzimidazole (PBI) est utilisé dans la présente invention comme liant. Ce n'est intrinsèquement pas un bon conducteur ionique, mais en milieu alcalin ou acide, il se révèle être un excellent polyélectrolyte avec respectivement de très bonnes propriétés de conduction anionique ou cationique. Le PBI est un polymère généralement utilisé, sous forme greffée, dans la fabrication de membranes conductrices protoniques pour les piles à combustible, dans les assemblages membrane-électrode et dans les électrolyseurs type PEM, comme une alternative au Nafion®. Dans ces applications, le PBI est généralement fonctionnalisé/greffé, par exemple par une sulfonation, afin de le rendre conducteur protonique. Le rôle du PBI dans ce type de système est alors différent de celui qu'il a dans la fabrication des électrodes selon la présente invention où il ne sert que de liant et n'a aucun rôle direct dans la réaction électrochimique.

Même si sa stabilité à long terme en milieu acide concentré est limitée, le chitosane, également utilisable comme polymère conducteur anionique ou cationique, est un polysaccharide présentant des propriétés de conduction ionique en milieu basique qui sont similaires à celles du PBI. (G. Couture, A. Alaaeddine, F. Boschet, B. Ameduri, Progress in Polymer Science 36 (2011) 1521-1557).

Avantageusement, l'électrode selon l'invention est formulée par un procédé qui comprend en outre une étape d'élimination du solvant en même temps ou après l'étape c). L'élimination du solvant peut être réalisée par toute technique connue de l'homme du métier notamment par évaporation ou inversion de phase.

En cas d'évaporation, le solvant est un solvant organique ou inorganique dont la température d'évaporation est inférieure à la température de décomposition du liant polymère utilisé. On peut citer à titre d'exemples le diméthylsulfoxyde (DMSO) ou l'acide acétique. L'homme du métier est capable de choisir le solvant organique ou inorganique adapté au polymère ou au mélange de polymère utilisé comme liant et susceptible d'être évaporé.

Selon un mode de réalisation préféré de l'invention, l'électrode est apte à être utilisée pour l'électrolyse de l'eau en milieu électrolyte liquide alcalin et le liant polymère est alors un conducteur anionique en milieu électrolyte liquide alcalin, notamment conducteur d'hydroxydes.

Au sens de la présente invention, on entend par milieu électrolyte liquide alcalin, un milieu dont le pH est supérieur à 7, avantageusement supérieur à 10.

Le liant est avantageusement conducteur d'hydroxydes en milieu alcalin. Il est stable chimiquement dans les bains d'électrolyse et a la capacité de diffuser et/ou de transporter les ions OH⁻ impliqués dans la réaction électrochimique jusqu'à la surface des particules, sièges des réactions redox de production des gaz H₂ et O₂. Ainsi, une surface qui ne serait pas en contact direct avec l'électrolyte est quand même impliquée dans la réaction d'électrolyse, point clé de l'efficacité du système. Le liant choisi et la mise en forme de l'électrode n'entravent pas la diffusion des gaz formés et limitent leur adsorption permettant ainsi leur évacuation.

Selon un autre mode de réalisation préféré de l'invention, l'électrode est apte à être utilisée pour l'électrolyse de l'eau en milieu électrolyte liquide acide et le liant polymère est un conducteur cationique en milieu électrolyte liquide acide, notamment conducteur de protons.

Au sens de la présente invention, on entend par milieu acide, un milieu dont le pH est inférieur à 7, avantageusement inférieur à 2.

Selon un mode de réalisation préféré de l'invention, le au moins un matériau électrocatalytique est choisi dans le groupe comprenant Ni, Co, Pt, Ir, Mo, Cr, Fe, V, Mn, Ru, Pd, C, Ti, W, Si, Bi, P, Nb, Zr, Ta et Os, leurs mélanges, leurs alliages ainsi que leurs oxydes simples ou complexes comme par exemple Co₃O₄ ou NiCo₂O₄.

La composition du mélange selon l'invention dépend de la nature chimique et de la longueur de la chaîne du polymère utilisé comme liant, du caractère dispersant et mouillant du solvant, de la granulométrie/densité apparente de la poudre et du type de dépôt utilisé. L'homme du métier, à la lumière de ses connaissances générales, sera capable de définir les quantités de chaque composant du mélange, notamment pour obtenir un mélange dont la viscosité est adaptée au moyen de dépôt choisi. La viscosité dépend notamment du ratio polymère/solvant et de la nature des particules de matériau catalytique. L'homme du métier, à partir de ses connaissances, saura déterminer les conditions les plus appropriées à la mise en oeuvre du mélange à déposer. La densité de particules de matériau catalytique doit être suffisante pour atteindre leur seuil de percolation électrique.

Selon un mode de réalisation préféré de l'invention, le rapport massique liant polymère/poudre divisée dans le mélange est compris entre 10/90 et 90/10, avantageusement compris entre 10/90 et 40/60.

A titre d'exemple, la quantité de mélange polymère-poudre dans le mélange à déposer est comprise entre 0,5 et 40% en masse par rapport à la masse totale du mélange, avantageusement comprise entre 2 et 20% en masse, et de préférence égale à 5% en masse.

Selon un mode de réalisation préféré du procédé selon l'invention, la poudre divisée se présente sous forme de particules de diamètre moyen compris entre 1 µm et 5 µm (poudre micrométrique), ou de particules de diamètre moyen compris entre 10 nm et 1 µm (poudre submicrométrique) ou de particules de diamètre moyen compris entre 1 nm et 10 nm (poudre nanométrique).

Un autre objet de l'invention est un procédé de formulation d'une électrode permettant la diffusion des gaz, apte à être utilisée pour l'électrolyse de l'eau en milieu électrolyte liquide comprenant les étapes suivantes :
a. la dissolution dans un solvant volatile ou un mélange de solvants volatiles, d'au moins un liant polymère conducteur ionique et permettant, à l'état solide, la diffusion des gaz formés lors de l'électrolyse,
b. l'addition à la solution obtenue à l'étape a) d'au moins un matériau électrocatalytique sous forme de poudre divisée, pour obtenir un mélange et
c. le dépôt, sur un support ou collecteur conducteur métallique ou de type métallique, ledit support ou ledit collecteur étant stable chimiquement en milieu aqueux, du mélange obtenu à l'étape b),
les étapes a) et b) pouvant être mises en oeuvre simultanément, successivement ou être inversées.

Avantageusement, le procédé selon l'invention peut comprendre en outre une étape d'élimination du solvant en même temps ou après l'étape c).

Un autre objet de l'invention est un dispositif d'électrolyse de l'eau pour la production d'un mélange gazeux d'hydrogène et d'oxygène et/ou la production d'hydrogène seul et/ou la production d'oxygène seul, en milieu électrolyte liquide, comprenant une anode, une cathode et un électrolyte, ledit dispositif étant caractérisé en ce que l'une au moins de l'anode et de la cathode est une électrode formulée selon l'invention.

La présente invention a encore pour objet un procédé de production d'un mélange hydrogène/oxygène ou d'hydrogène seul ou la production d'oxygène seul par électrolyse de l'eau soit en milieu électrolyte liquide alcalin, soit en milieu électrolyte liquide acide, mettant en oeuvre un dispositif d'électrolyse selon la présente invention.

Ce dispositif peut être monté en série ou en parallèle.

L'invention est illustrée par les exemples 1 à 7 et les figures 1 à 7 qui suivent :
- La figure 1 représente les courbes de polarisation cathodique mesurées selon l'exemple 2 pour des électrodes composites selon l'invention préparées conformément à l'exemple 1 à partir d'un mélange de Ni micrométrique et de PBI (90/10) et présentant différents taux de charge en Ni, comparativement à celles d'électrodes à base de Ni électrodéposé, de mousse de Ni ou formée d'une grille inox.
- La figure 2 représente les courbes de polarisation cathodique pour des électrodes composites selon l'invention présentant un taux de charge en Ni nanométrique de 5 mg/cm², mesurées conformément à l'exemple 3.
- La figure 3 représente la courbe de l'intensité électrique d'un dispositif d'électrolyse selon l'invention (taux de charge en Ni 40 mg/cm² - mélange Ni/PBI (90/10) en fonction du temps comparativement à un dispositif comprenant une simple grille inox comme électrode, mesurée conformément à l'exemple 4.
- La figure 4 représente la courbe de polarisation cathodique pour une électrode à base de cobalt et de PBI (taux de charge en Co 6mg/cm² - Co/PBI 90/10) mesurée conformément à l'exemple 5.
- La figure 5 représente la courbe de polarisation anodique pour une électrode à base de cobaltite Co₃O₄ et de PBI (taux de charge en Co₃O₄ 2mg/cm² - Co₃O_{4/}PBI 90/10) mesurée conformément à l'exemple 5.
- La figure 6 représente la courbe de polarisation cathodique pour une électrode composite à base de chitosane-Ni (mélange Ni/chitosane 90/10 - taux de charge en Ni 6,4 mg/cm²) mesurée conformément à l'exemple 6.
- La figure 7 représente la courbe de polarisation cathodique pour une électrode composite à base de Pt et de PBI (taux de charge en Pt 5 mg/cm²
- mélange Pt/PBI (90/10)), mesurée conformément à l'exemple 7.

### Exemple 1 - Préparation des électrodes

### 1.1. Matériau

Les électrodes sont fabriquées à base de poudres micrométriques commerciales Ni (5 µm, pureté 99,7%, Aldrich), Co (> 99,8%, Fluka), Co₃O₄ (> 71% Co, Fluka) et de poudres sub-micrométriques et nanométriques synthétisées au laboratoire.

### 1.2. - Préparation du support

Une grille d'acier inoxydable 316L (Gantois ref. N°42.73 FR 0.25) est découpée et repliée sur elle-même dans sa longueur, pour obtenir la dimension finale de l'électrode.

### 1.3. Préparation de l'électrode par moulage du film

### 1.3.1. Préparation du film

Un mélange comprenant 90% en masse d'une poudre catalytique et 10 % en masse de polymère liant (PBI) est dissous à raison de 5% en masse dans du diméthylsulfoxyde (DMSO).

Un moule est réalisé à l'aide d'un film autocollant en Teflon^{®} déposé sur une plaque en verre préalablement nettoyée. Un volume du mélange poudre catalytique - PBI est déposé dans le moule. Le volume de mélange déposé est adapté à la quantité finale de poudre catalytique souhaitée dans l'électrode (densité surfacique exprimée en g de poudre par m² d'électrode).
L'ensemble poudre catalytique - PBI est séché à l'étuve pendant une durée déterminée variant en fonction du volume déposé, et à une température spécifique pour chaque type de mélanges.

### 1.3.2. Assemblage support - film

Le film est découpé à la taille finale d'électrode souhaitée. Pour figer le système, le film est trempé dans de l'eau ultrapure. Le film est ensuite décollé de la plaque de verre puis placé entre les deux plans de la grille préalablement mise en forme. L'assemblage brut ainsi réalisé est pressé à 5 tonnes/cm² pendant 2 minutes environ. L'ensemble est séché à l'étuve afin d'en retirer l'humidité résiduelle. L'assemblage composite ainsi réalisé constitue une électrode pleine prête à fonctionner.

### 1.4. Préparation de l'électrode par trempage

La grille d'acier inoxydable est directement trempée dans un mélange 90-10 % Co₃O₄-PBI *Celanese*^{®} à 5 % en masse dans le DMSO, préparé comme indiqué dans l'exemple 1.1, puis dans de l'eau pure à l'aide d'une pince. L'ensemble est séché à 150 °C. Les opérations sont répétées jusqu'à obtenir une couverture intégrale du support.

### Exemple 2 - Caractérisation des électrodes à base de poudres micrométriquede nickel et de PBI

Les activités catalytiques des électrodes selon l'invention sont déterminées à partir des courbes de polarisation. Les mesures ont été réalisées dans une cellule standard à trois électrodes (électrode de référence Ag/AgCl/3MNaCl, contre-électrode en platine, et électrode de travail correspondant à l'électrode à caractériser). L'ensemble des caractérisations a été réalisé à température ambiante dans une solution d'hydroxyde de potassium 1 mol/L.

On utilise une poudre de nickel commerciale présentant un diamètre moyen de particules de 5 µm et du PBI. Les électrodes composites à base de poudre de nickel, sont préparées par moulage et ont un taux de charge en poudre de Ni de 5, 10 et 40 mg/cm² d'électrode.

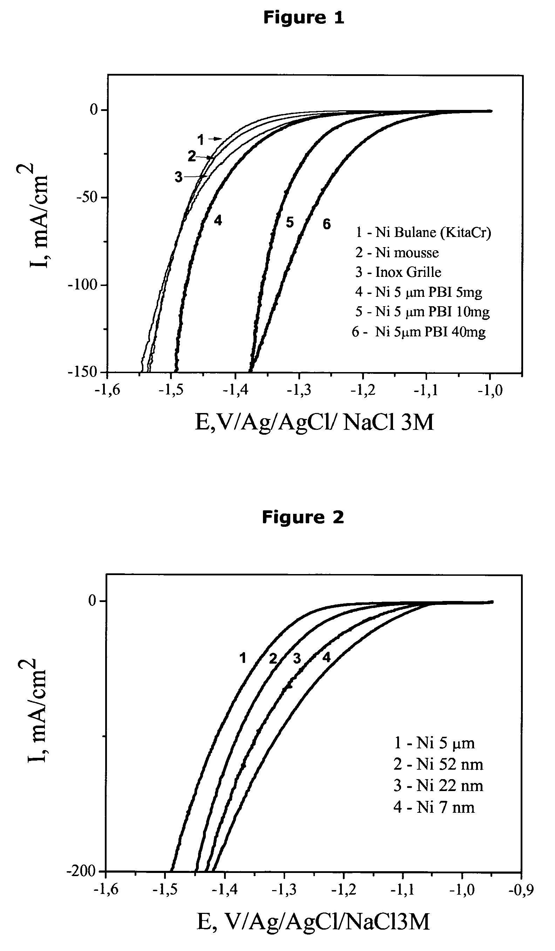

Les courbes de polarisation obtenues sont représentées dans la figure 1. Elles ont été enregistrées avec une vitesse de variation linéaire en potentiel de 1 mV/s. Les courbes présentées ont été corrigées de la chute ohmique. Ces différentes électrodes ont été comparées avec une électrode en inox (support simple), une électrode en mousse de nickel de haute pureté (Goodfellow NI003852/1), et une électrode en nickel électrodéposé (Kitachrome 25 µm sur acier doux). Les courbes de polarisation présentées permettent de mesurer les surtensions correspondantes de production de H₂ en fonction de la nature de l'électrode : plus la surtension est faible (en valeur absolue) plus le système est efficace.

La surtension cathodique est considérablement réduite avec les électrodes composites à base de nickel selon l'invention par rapport aux autres électrodes. Ainsi, pour une densité de courant de 100 mA/cm², les surtensions obtenues respectivement pour l'inox, le nickel électrodéposé (Kitachrome 25 µm sur acier doux), la mousse de nickel, les électrodes composites selon l'invention avec 5 mg/ cm² de Ni, avec 10 mg/ cm² de Ni et avec 40 mg/ cm² de Ni sont données dans le tableau 1.

**Tableau 1 : Mesures de surtensions déduites des courbes de polarisation de la figure 1 pour une densité de courant de 100 mA/cm²**

| **Composition de l'électrode** | **Surtension (mV)** |
|---|---|
| Grille d'acier inoxydable | 475 |
| Ni électrodéposé (Kitachrome 25 µm sur acier doux) | 488 |
| Mousse de Ni | 475 |
| Ni 5 mg/cm² | 450 |
| Ni 10 mg/cm² | 332 |
| Ni 40 mg/cm² | 302 |

Ainsi ces résultats montrent que les électrodes selon l'invention sont beaucoup plus efficaces que les électrodes de référence correspondant à l'état de la technique.

### Exemple 3. Electrodes à base de particules nanométriques de nickel et de PBI

Des électrodes composites ont été fabriquées avec des poudres de nickel de tailles nanométriques synthétisées au laboratoire et du PBI conformément à l'exemple 1. Le taux de charge en Ni des électrodes est de 5 mg/ cm².

Les courbes de polarisation pour les différents types d'électrodes sont données dans la figure 2.

Avec une structuration nanométrique du nickel et en gardant le processus d'élaboration des électrodes identique à celui utilisé pour les poudres micrométriques, de meilleurs résultats que ceux obtenus pour les poudres micrométriques peuvent être observés pour certaines compositions. Ici pour 100 mA/cm² d'électrode on enregistre des surtensions inférieures, par exemple égale à -352 mV pour une électrode à base de poudre de nickel nanostructurée avec une taille moyenne de particules de 52 nm, égale à - 321 mV pour une électrode à base de poudre de nickel nanostructurée avec une taille moyenne de particules de 22 nm, égale à 286 mV pour une électrode à base de poudre de nickel nanostructurée avec une taille moyenne de particules de 7 nm.

Ainsi ces résultats montrent que les électrodes selon l'invention, grâce à l'augmentation de surface due à l'utilisation de poudre(s) divisée(s), sont beaucoup plus efficaces que les électrodes de référence correspondant à l'état de la technique.

### Exemple 4. Etude de durabilité d'une électrode à base de nickel à 40 ma/cm² (Ni/PBI 90/10)

Une étude de durabilité d'une électrode composite à base de Ni 40 mg/cm² et de PBI a été réalisée dans les mêmes conditions expérimentales que les courbes de polarisation de l'exemple 2. L'électrode a été préparée par moulage, comme décrit dans l'exemple 1. L'électrode de travail a été maintenue à un potentiel de -1,7 V/Ag/AgCl/3MNaCl (soit une forte surtension de -700 mV) et l'évolution du courant a été mesurée en fonction du temps par ampèrométrie. Pour comparaison, la simple grille d'inox a été testée dans les mêmes conditions.

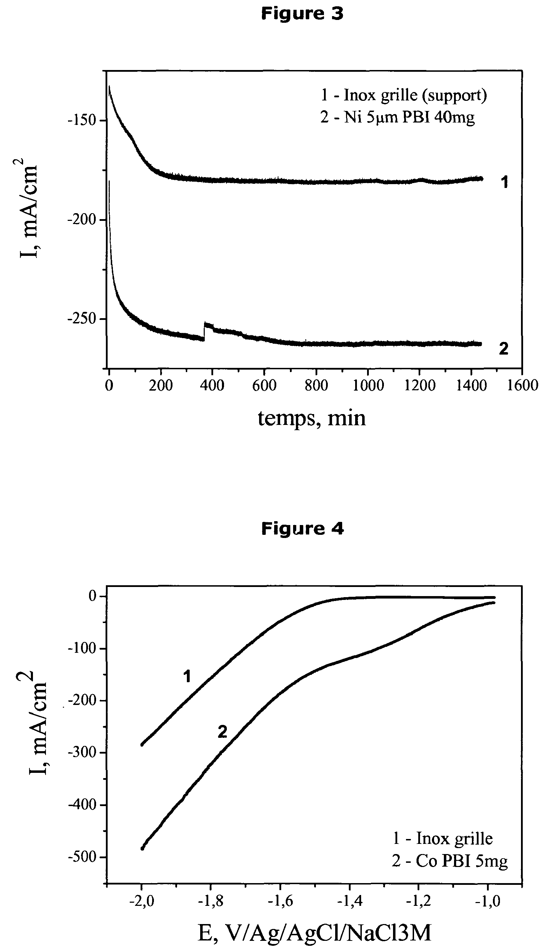

Les résultats sont présentés dans la figure 3.

Après 24 heures de fonctionnement en continu dans des conditions de régime forcé, aucune perte de matière ni aucune perte d'activité n'ont été observées pour les électrodes selon l'invention.

### Exemple 5. Electrodes composites à base de particules de cobalt / cobaltite de cobalt et de PBI

Des électrodes composites ont été réalisées par moulage avec des poudres commerciales de cobalt (pureté> 99,8%, Fluka) et de cobaltite de cobalt Co₃O₄ (pureté> 71%, Fluka) selon l'exemple 1. L'électrode composite à base de cobalt est utilisée comme matériau de cathode, et l'électrode à base de Co₃O₄ est utilisée comme matériau d'anode avec des teneurs massiques de 2 à 6 mg/cm² d'électrode.

Les courbes de polarisation cathodique et anodique ont été enregistrées dans les mêmes conditions que selon l'exemple 2 (50 mV/s). Pour comparaison, la simple grille d'inox a été testée dans les mêmes conditions.

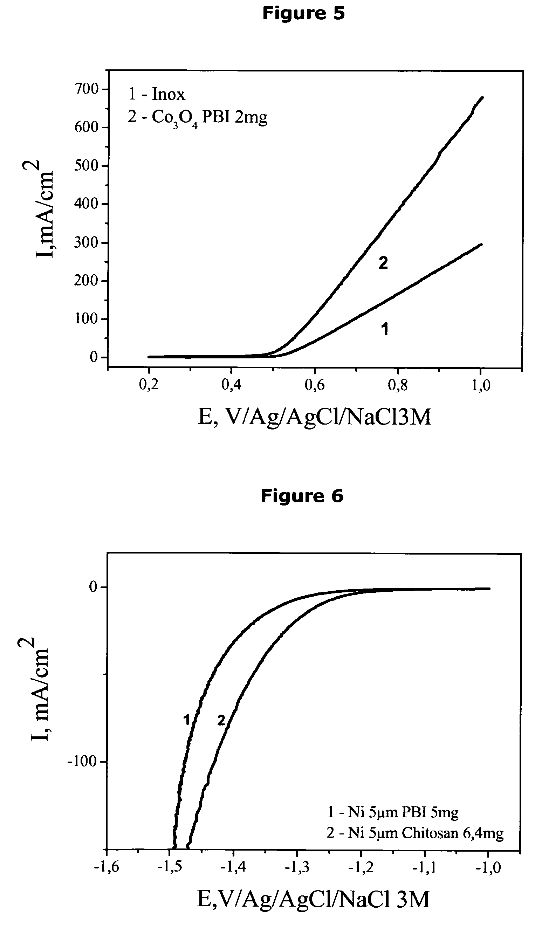

Les courbes présentées dans les figures 4 et 5 n'ont pas été corrigées de la chute ohmique.

On observe pour chacune des électrodes composites une baisse considérable de la surtension comparativement à l'électrode en inox ce qui se traduit donc une meilleure activité électrocatalytique (plus de gaz pour moins de puissance électrique).

### Exemple 6. Electrode composite à base de poudre de nickel micrométrigue et de chitosane

Une poudre de nickel micrométrique commerciale (5pm) a été utilisée. Les proportions Ni - chitosane dans le mélange sont 90-10 % en masse.

Le chitosane sous forme de poudre est dissous dans de l'acide acétique glacial. Un volume de DMSO égal au volume d'acide acétique est ajouté. On obtient un gel avec une concentration de chitosane de 0,5 % en masse. Le gel est mélangé à la quantité nécessaire de poudre de nickel pour avoir un mélange Ni/Chitosane (90/10). Une fois le mélange homogénéisé, il est déposé sur une grille d'acier inoxydable, séché et ensuite pressé à 2 tonnes/cm² pendant 2 minutes.

La figure 6 présente la courbe de polarisation obtenue pour ce type d'électrode Ni/chitosane, ainsi que la courbe de polarisation obtenue pour une électrode Ni/PBI telle que décrite dans l'exemple 2. Les résultats obtenus avec du chitosane sont tout à fait comparables avec ceux obtenus avec PBI.

### Exemple 7. Electrode composite à base de poudre de Platine nanométrique et de PBI en milieu acide

Une électrode composite a été fabriquée avec une poudre de platine synthétisée au laboratoire et dont les particules sont de taille nanométrique (~ 5nm) et du PBI conformément à l'exemple 1. Le taux de charge de électrode en Pt est de 5 mg/ cm².

La courbe de polarisation a été réalisée dans une cellule standard à trois électrodes (électrode de référence Ag/AgCl/3M NaCl, contre-électrode en platine, et électrode de travail correspondant à l'électrode composite a base de Pt), à température ambiante, dans un électrolyte H₂SO₄ 0,5 mol/L. La mesure a été faite avec une vitesse de variation de potentiel de 1 mV/s, et la courbe est corrigée de la chute ohmique.

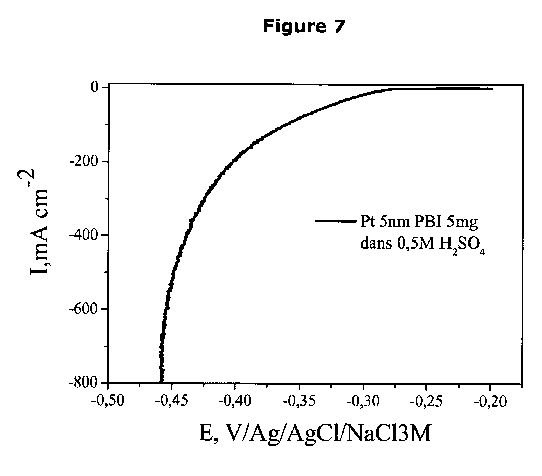

La figure 7 présente la courbe de polarisation obtenue pour une électrode composite Pt/PBI obtenue en milieu acide. La diminution de surtension est considérable : pour une densité de courant de 100 mA/cm² d'électrode on enregistre une surtension de -164 mV.

La méthode de fabrication des électrodes conforme à l'invention permet de fabriquer des électrodes pour l'électrolyse de l'eau en milieu électrolyte liquide à partir d'une grande variété d'électrocatalyseurs sous forme de poudre micrométrique, sub-micrométrique ou nanométrique.

Les électrodes préparées par cette technique remplissent toute une série de critères du cahier des charges spécifiques aux électrodes pour l'électrolyse en milieu alcalin ou acide:
- une grande surface active,
- une bonne tenue mécanique,
- une bonne stabilité des propriétés catalytiques
- de faibles surtensions
- une bonne durabilité.

Cette méthode de préparation des électrodes est simple et représente un progrès important dans le domaine de l'électrolyse de l'eau.

Par ailleurs, les procédés électrochimiques qui utilisent des électrodes fabriquées selon l'invention, pour l'électrolyse de l'eau, exigent des surtensions d'activation plus faibles, ce qui se traduit par d'importantes diminutions de puissance électrique.

L'hydrogène et l'oxygène obtenus selon le procédé de l'invention ainsi que leur mélange peuvent être utilisés dans toutes les applications connues de l'homme du métier. L'hydrogène en particulier peut être utilisé comme vecteur énergétique.

## Revendications

1. Electrode apte à être utilisée pour l'électrolyse de l'eau en milieu électrolyte liquide, **caractérisée en ce qu'**elle est formulée par un procédé de formulation comprenant les étapes suivantes:
a. la dissolution dans un solvant volatile ou un mélange de solvants volatiles, d'au moins un liant polymère conducteur ionique et permettant, à l'état solide, la diffusion des gaz formés lors de l'électrolyse,
b. l'addition à la solution obtenue à l'étape a) d'au moins un matériau électrocatalytique sous forme de poudre divisée, pour obtenir un mélange, et
c. le dépôt sur un support ou collecteur conducteur métallique ou de type métallique, ledit support ou ledit collecteur étant ajouré et stable chimiquement en milieu aqueux, du mélange obtenu à l'étape b),
les étapes a) et b) pouvant être mises en oeuvre simultanément, successivement ou être inversées.

2. Electrode selon la revendication 1, **caractérisée en ce que** le procédé comprend en outre une étape d'élimination du solvant en même temps ou après l'étape c).

3. Electrode selon l'une quelconque des revendications précédentes, **caractérisée en ce que** elle est apte à être utilisée pour l'électrolyse de l'eau en milieu électrolyte liquide alcalin et **en ce que** le liant polymère est un conducteur anionique en milieu électrolyte liquide alcalin, notamment conducteur d'hydroxydes.

4. Electrode selon l'une quelconque des revendications 1 ou 2, **caractérisée en ce qu'**elle est apte à être utilisée pour l'électrolyse de l'eau en milieu électrolyte liquide acide et **en ce que** le liant polymère est un conducteur cationique en milieu électrolyte liquide acide, notamment conducteur de protons.

5. Electrode selon l'une quelconque des revendications précédentes, **caractérisée en ce que** le au moins un matériau électrocatalytique est choisi dans le groupe comprenant Ni, Co, Pt, Ir, Mo, Cr, Fe, V, Mn, Ru, Pd, C, Ti, W, Si, Bi, P, Nb, Zr, Ta et Os, leurs mélanges, leurs alliages ainsi que leurs oxydes simples ou complexes.

6. Electrode selon l'une quelconque des revendications précédentes, **caractérisée en ce que** le rapport massique liant polymère/poudre divisée est compris entre 10/90 et 90/10, avantageusement compris entre 10/90 et 40/60.

7. Electrode selon l'une quelconque des revendications précédentes, **caractérisée en ce que** la poudre divisée est sous forme de particules de diamètre moyen compris entre 1 µm et 5 µm, ou de particules de diamètre moyen compris entre 10 nm et 1 µm ou de particules de diamètre moyen compris entre 1 et 10 nm.

8. Procédé de formulation d'une électrode pour l'électrolyse de l'eau en milieu électrolyte liquide selon l'une quelconque des revendications précédentes comprenant les étapes suivantes:
a. la dissolution dans un solvant volatile ou un mélange de solvants volatiles, d'au moins un liant polymère conducteur ionique et permettant, à l'état solide, la diffusion des gaz formés lors de l'électrolyse,
b. l'addition à la solution obtenue à l'étape a) d'au moins un matériau électrocatalytique sous forme de poudre divisée, pour obtenir un mélange et
c. le dépôt sur un support ou collecteur conducteur métallique ou de type métallique, ledit support ou ledit collecteur étant ajouré et stable chimiquement en milieu aqueux, du mélange obtenu à l'étape b),
les étapes a) et b) pouvant être mises en oeuvre simultanément, successivement ou être inversées.

9. Procédé selon la revendication 8 comprenant en outre une étape d'élimination du solvant en même temps ou après l'étape c).

10. Dispositif d'électrolyse de l'eau en milieu électrolyte liquide pour la production d'un mélange gazeux d'hydrogène et d'oxygène et/ou la production d'hydrogène seul et/ou la production d'oxygène seul, comprenant une anode, une cathode et un électrolyte, ledit dispositif étant caractérisé en ce l'une au moins de l'anode et de la cathode est une électrode selon l'une quelconque des revendications 1 à 7.

11. Procédé de production d'un mélange hydrogène /oxygène ou d'hydrogène seul et/ou la production d'oxygène seul par électrolyse de l'eau en milieu électrolyte liquide **caractérisé en ce qu'**il met en oeuvre un dispositif d'électrolyse selon la revendication 10.

12. Utilisation d'une électrode formulée par un procédé de formulation comprenant les étapes selon la revendication 1 pour la production d'un mélange hydrogène /oxygène ou d'hydrogène seul et/ou la production d'oxygène seul par électrolyse de l'eau en milieu électrolyte liquide.

## Patentansprüche

1. Elektrode, zur Anwendung für die Wasserelektrolyse im flüssigen Elektrolytmilieu geeignet, **dadurch gekennzeichnet, dass** sie durch ein Formulierungsverfahren mit folgenden Arbeitsschritten zusammengesetzt ist:
a. die Auflösung in einem flüchtigen Lösungsmittel oder einem Gemisch aus flüchtigen Lösungsmitteln von mindestens einem ionenleitenden Polymer-binder, im festen Zustand die Diffusion der während der Elektrolyse gewonnenen Gase ermöglichend,
b. die Zumischung zur im Arbeitsschritt a) gewonnenen Lösung von mindestens einem elektrokatalytischen Stoff in Form von zerteiltem Pulver, um ein Gemisch zu erzeugen, und
c. die Ablage des im Arbeitsschritt b) gewonnenen Gemischs auf einem leitenden Träger bzw. Kollektor aus Metall oder Metall ähnlichem Material, wobei dieser Träger oder dieser Kollektor durchbrochen und chemisch stabil in wässrigem Milieu ist,
wobei die Arbeitsschritte a) und b) gleichzeitig, hintereinander oder in der umgekehrten Reihenfolge ausgeführt werden können.

2. Elektrode nach Anspruch 1, **dadurch gekennzeichnet, dass** das Verfahren außerdem einen Arbeitsschritt zur Ausscheidung des Lösungsmittels parallel zu oder nach dem Arbeitsschritt c) umfasst.

3. Elektrode nach einem der vorhergehenden Ansprüche, **dadurch gekennzeichnet, dass** sie zur Anwendung für die Wasserelektrolyse im flüssigen alkalischen Elektrolytmilieu geeignet ist, und dadurch, dass es sich beim Polymerbinder um einen anionischen Leiter im flüssigen alkalischen Elektrolytmilieu, insbesondere einen Hydroxidenleiter handelt.

4. Elektrode nach einem der Ansprüche 1 oder 2, **dadurch gekennzeichnet, dass** sie für die Anwendung für die Wasserelektrolyse im flüssigen sauren Elektrolytmilieu geeignet ist, und dadurch, dass es sich beim Polymerbinder um einen Kationenleiter im flüssigen sauren Elektrolytmilieu, insbesondere einen Protonenleiter handelt.

5. Elektrode nach einem der vorhergehenden Ansprüche, **dadurch gekennzeichnet, dass** der mindestens eine elektrokatalytische Stoff aus der Gruppe bestehend aus Ni, Co, Pt, Ir, Mo, Cr, Fe, V, Mn, Ru, Pd, C, Ti, W, Si, Bi, P, Nb, Zr, Ta und Os, ihren Mischungen, Legierungen sowie ihren einfachen bzw. komplexen Oxiden ausgesucht wird.

6. Elektrode nach einem der vorhergehenden Ansprüche, **dadurch gekennzeichnet, dass** das Massenverhältnis Polymerbinder/zerteiltem Pulver zwischen 10/90 und 90/10, vorteilhafterweise zwischen 10/90 und 40/60 liegt.

7. Elektrode nach einem der vorhergehenden Ansprüche, **dadurch gekennzeichnet, dass** das zerteilte Pulver in Form von Partikeln mit einem durchschnittlichen Durchmesser von 1-5 µm oder von Partikeln mit einem durchschnittlichen Durchmesser von 10 nm-1 µm oder von Partikeln mit einem durchschnittlichen Durchmesser von 1-10 nm ist.

8. Formulierungsverfahren für eine Elektrode zur Wasserelektrolyse im flüssigen Elektrolytmilieu nach einem der vorhergehenden Ansprüche, folgende Arbeitsschritte umfassend:
a. die Auflösung in einem flüchtigen Lösungsmittel oder einem Gemisch aus flüchtigen Lösungsmitteln von mindestens einem ionenleitenden Polymer-binder, im festen Zustand die Diffusion der während der Elektrolyse gewonnenen Gase ermöglichend,
b. die Zumischung zur im Arbeitsschritt a) gewonnenen Lösung von mindestens einem elektrokatalytischen Stoff in Form von zerteiltem Pulver, um ein Gemisch zu erzeugen, und
c. die Ablage des im Arbeitsschritt b) gewonnenen Gemischs auf einem leitenden Träger bzw. Kollektor aus Metall oder Metall ähnlichem Material, wobei dieser Träger oder dieser Kollektor durchbrochen und chemisch stabil in wässrigem Milieu ist,
wobei die Arbeitsschritte a) und b) gleichzeitig, hintereinander oder in der umgekehrten Reihenfolge ausgeführt werden können.

9. Verfahren nach Anspruch 8, außerdem einen Arbeitsschritt zur Ausscheidung des Lösungsmittels parallel zu oder nach dem Arbeitsschritt c) umfassend.

10. Vorrichtung der Wasserelektrolyse im flüssigen Elektrolytmilieu für die Gewinnung eines Gasgemisches aus Wasserstoff und Sauerstoff und/oder die Gewinnung von Wasserstoff allein und/oder die Gewinnung von Sauerstoff allein, eine Anode, eine Kathode und einen Elektrolyt umfassend, wobei die Vorrichtung **dadurch gekennzeichnet ist, dass** wenigstens eine, ob der Anode oder der Kathode, eine Elektrode nach einem der Ansprüche 1-7 ist.

11. Verfahren für die Gewinnung eines Gemisches aus Wasserstoff/Sauerstoff oder Wasserstoff allein und/oder für die Gewinnung allein von Sauerstoff durch Wasserelektrolyse im flüssigen Elektrolytmilieu, **dadurch gekennzeichnet, dass** es eine Elektrolysevorrichtung nach Anspruch 10 einsetzt.

12. Anwendung einer Elektrode, die mittels eines Formulierungsverfahrens zusammengesetzt ist, welches die Arbeitsschritte nach Anspruch 1 für die Gewinnung eines Wasserstoff/Sauerstoff-Gemisches oder eines Gemisches allein aus Wasserstoff und/oder die Gewinnung allein von Sauerstoff durch Wasserelektrolyse im flüssigen Elektrolytmilieu umfasst.

## Claims

1. Electrode suitable to be used for the electrolysis of water in a liquid electrolyte medium, **characterized in that** it is formulated by a formulation method comprising the following steps:
a. dissolving, in a volatile solvent or a mixture of volatile solvents, at least one ion-conducting polymer binder that allows, in the solid state, the diffusion of the gases formed during electrolysis,
b. adding, to the solution obtained in step a), at least one electrocatalytic material in the form of divided powder, in order to obtain a mixture, and
c. depositing the mixture obtained in step b) on a metallic or metallic-type conductive support or collector, said support or said collector being openwork and chemically stable in an aqueous medium,
steps a) and b) being able to be implemented simultaneously, successively or to be reversed.

2. Electrode according to claim 1, **characterized in that** the method also comprises a step of removing the solvent at the same time as or after step c).

3. Electrode according to any one of the preceding claims, **characterized in that** it is suitable to be used for the electrolysis of water in an alkaline liquid electrolyte medium and **in that** the polymer binder is an anion conductor in an alkaline liquid electrolyte medium, in particular conductive as regards hydroxides.

4. Electrode according to any one of claims 1 or 2, **characterized in that** it is suitable to be used for the electrolysis of water in an acid liquid electrolyte medium and **in that** the polymer binder is a cation conductor in an acid liquid electrolyte medium, in particular conductive as regards protons.

5. Electrode according to any one of the preceding claims, **characterized in that** the at least one electrocatalytic material is chosen from the group comprising Ni, Co, Pt, Ir, Mo, Cr, Fe, V, Mn, Ru, Pd, C, Ti, W, Si, Bi, P, Nb, Zr, Ta and Os, mixtures thereof, alloys thereof as well as simple or complex oxides thereof.

6. Electrode according to any one of the preceding claims, **characterized in that** the mass ratio of polymer binder/divided powder is comprised between 10/90 and 90/10, advantageously comprised between 10/90 and 40/60.

7. Electrode according to any one of the preceding claims, **characterized in that** the divided powder is in the form of particles with an average diameter comprised between 1 µm and 5 µm, or of particles with an average diameter comprised between 10 nm and 1 µm or of particles with an average diameter comprised between 1 and 10 nm.

8. Method for formulating an electrode for the electrolysis of water in a liquid electrolyte medium, comprising the following steps:
a. dissolving, in a volatile solvent or a mixture of volatile solvents, at least one ion-conducting polymer binder that allows, in the solid state, the diffusion of the gases formed during electrolysis,
b. adding, to the solution obtained in step a), at least one electrocatalytic material in the form of divided powder, in order to obtain a mixture, and
c. depositing the mixture obtained in step b) on a metallic or metallic-type conductive support or collector, said support or said collector being openwork and chemically stable in an aqueous medium,
steps a) and b) being able to be implemented simultaneously, successively or to be reversed.

9. Method according to claim 8, also comprising a step of removing the solvent at the same time as or after step c).

10. Device for the electrolysis of water in a liquid electrolyte medium to produce a gaseous mixture of hydrogen and oxygen and/or to produce hydrogen alone and/or to produce oxygen alone, comprising an anode, a cathode and an electrolyte, said device being **characterized in that** at least one of the anode and the cathode is an electrode according to any one of claims 1 to 7.

11. Method for producing a hydrogen/oxygen mixture or hydrogen alone, and/or for producing oxygen alone by electrolysis of water in a liquid electrolyte medium **characterized in that** it uses a device for electrolysis according to claim 10.

12. Use of an electrode formulated according to a formulation process comprising the steps according to claim 1 for producing a hydrogen/oxygen mixture or hydrogen alone, and/or for producing oxygen alone by electrolysis of water in a liquid electrolyte medium.
